# EUROPEAN PATENT APPLICATION

(11) **EP 2 149 951 A1**
(43) Date of publication of application: **03.02.2010**
(21) Application number: 09275055.3
(22) Date of filing: 30.07.2009
(51) Int. Cl.: H02G 3/04

(54) **Method of cable assembly**

(30) Priority: 30.07.2008 GB 0813860
(71) Applicant: Tyco Electronics UK Ltd., Wiltshire SN3 5HH (GB)
(72) Inventor: Pearce, David, Wootton Bassett, Wiltshire SN4 8JJ (GB)
(74) Representative: Townsend, Stephen

(57) **Abstract**

A method of assembly is disclosed comprising the steps of: collocating a plurality of individual cables (11,11',11'') in a first elastomeric tube (13) held in a stretched condition by an engaged hold-out mechanism (12); and disengaging the hold-out mechanism causing the elastomeric tube to contract and to urge the cables together. Also disclosed is the resultant cable assembly (10) comprising a plurality of individual cables (11,11',11'') urged together by a first elastomeric tube (13) coupled to a disengaged hold-out mechanism (12).

## Description

This invention relates to a method of cable assembly, and the resultant assembly.

In accordance with the present invention, there is provided a method of cable assembly comprising the steps of collocating a plurality of individual cables in a first elastomeric tube held in a stretched condition by an engaged hold-out mechanism; and disengaging the hold-out mechanism causing the elastomeric tube to contract and to urge the cables together.

The method may further comprise the step of applying a second elastomeric tube to the outside of the first elastomeric tube which may be done both before and after collocating a plurality of individual cables in a first elastomeric tube and both before and after disengaging the hold-out mechanism. Once the hold-out mechanism is disengaged, the second elastomeric tube may provide a watertight seal against the first elastomeric surface.

Further provided in accordance with the present invention is the resultant assembly comprising a plurality of individual cables urged together by a first elastomeric tube coupled to a disengaged hold-out mechanism.

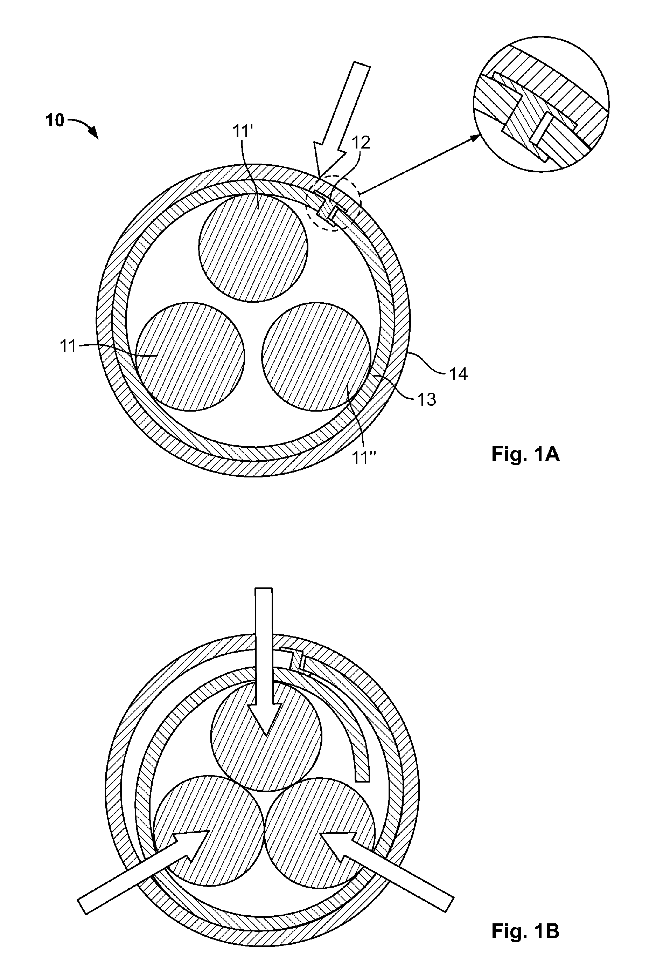

The invention will now be described, by way of example only, with reference to the following figures in which figures 1 a and 1 b show, schematically, the method of assembly according to the present invention.

Referring to figures 1a, three individual cables 11, 11', 11" are shown loosely collocated together and surrounded by a first elastomeric tube 13 held in a stretched condition by an engaged hold-out mechanism 12. Surrounding the stretched first elastomeric tube is a second elastomeric tube, also in a stretched condition.

The hold-out mechanism (12) is disengaged by applying pressure to the elastomeric tubes (13, 14) as illustrated by the arrow causing one side of the elastomeric tube to disengage with the hold-out mechanism.
Referring to figures 1 b, once the hold-out mechanism is disengaged, the resilience of the first elastomeric tube (13) causes it to curl up, thereby reducing its effective diameter and wherein leaving a longitudinal edge of the first elastomeric tube residing in a void defined by two individual cables and the first elastomeric tube. This in turn applies pressure on the individual cables (11, 11, 11") as illustrated by the arrows, thereby urging the cables together.

The outer surface of the curled up first elastomeric tube (13) more closely approximates a perfect tube compared to the combined outer surface of the individual cables (11, 11', 11") which enables the second elastomeric tube (14) to provide a watertight seal around the first elastomeric tube (13) and hence also around the cables. Such a watertight seal would not otherwise be possible.

The present invention is illustrated with a hold-out mechanism of a type disclosed in WO98/27632, however, it will be appreciated that the invention is equally applicable to other types of hold-out mechanism cable of holding an elastomeric tube in a stretched condition whereby individual cables can be located therein.

## Claims

1. A method of cable assembly comprising the steps of:
- collocating a plurality of individual cables (11, 11', 11") in a first elastomeric tube (13) held in a stretched condition by an engaged hold-out mechanism (12); and
- disengaging the hold-out mechanism causing the elastomeric tube to contract and to urge the cables together.

2. A method according to claim 1 wherein, after disengaging the holdout mechanism, a longitudinal edge of the first elastomeric tube resides in a void defined by two individual cables and first elastomeric tube.

3. A method according to claim 1 or claim 2 further comprising the step of:
- applying a second elastomeric tube (14) to the outside of the first elastomeric tube (13).

4. A method according to claim 3 further wherein the step of applying a second elastomeric tube (14) to the outside of the first elastomeric tube (13) is done before disengaging the hold-out mechanism (12).

5. A method according to claim 3 or claim 4 wherein, once the hold-out mechanism is disengaged (12), the second elastomeric tube (14) provides a watertight seal against the first elastomeric surface (13).

6. A cable assembly (10) comprising a plurality of individual cables urged together by a first elastomeric tube coupled to a disengaged hold-out mechanism.

7. A cable assembly according to claim 6 wherein a longitudinal edge of the first elastomeric tube resides in a void defined by two individual cables and the first elastomeric tube.

8. A cable assembly (10) according to claim 6 or claim 7 further comprising a second elastomeric tube applied to the outside of the first elastomeric tube.

9. A cable assembly (10) according to claim 7 wherein the second elastomeric tube provides a watertight seal against the first elastomeric surface.
